# DEMANDE DE BREVET EUROPEEN

(11) **EP 4 600 078 A1**
(43) Date de publication de la demande: **13.08.2025**
(21) Numéro de dépôt: 25153005.1
(22) Date de dépôt: 21.01.2025
(51) Int. Cl.: B60L 53/16, B60L 53/18

(54) **CABLE DE CHARGE ELECTRIQUE COMPORTANT UN OBTURATEUR D'UNE EMBASE DC POUR VEHICULE AUTOMOBILE**

(30) Priorité: 26.01.2024 FR 2400771
(71) Demandeur: Ampere SAS, 92100 Boulogne-Billancourt (FR)
(72) Inventeur: CHAGNIOT, Benoit, 78280 GUYANCOURT (FR); MARRY, Stefan, 78280 GUYANCOURT (FR)
(74) Mandataire: Renault Group

(57) **Abrégé**

La présente invention concerne une fiche mâle (4) de charge d'un accumulateur d'énergie électrique de traction pour véhicule automobile (1), comprenant un connecteur à contacts électriques s'étendant longitudinalement depuis un corps de ladite fiche mâle, ledit connecteur étant connecté à un câble d'alimentation électrique configuré pour former un pont de recharge électrique vers un premier port de recharge du véhicule automobile ; remarquable en ce que ladite fiche mâle comprenant, en outre, un obturateur (6 ; 106) faisant saillie depuis le corps à proximité du connecteur à contacts électriques, ledit obturateur étant configuré pour obturer un deuxième port de recharge du véhicule automobile disposé directement en dessous du premier port de recharge, lors d'une recharge électrique dudit véhicule automobile.

## Description

### Domaine technique

La présente invention concerne le domaine des véhicules automobiles, plus particulièrement le domaine de la recharge électrique pour des véhicules automobiles équipés de batteries de traction.

### Technique antérieure

Les véhicules électriques et hybrides rechargeables comportent de manière conventionnelle une trappe permettant d'accéder à un port de recharge apte à recevoir une fiche mâle, également désignée pistolet mâle, appartenant à un câble de recharge électrique permettant le rechargement des batteries de traction.

Les ports de recharge des modèles actuels respectent de plus en plus le standard « Combo CCS 2 », acronyme du nom anglais « Combined Charging System » qui inclut une combinaison d'un port de recharge à courant alternatif, communément désigné par : port AC, et d'un port de recharge à courant continu, désigné port DC.

Le port AC est configuré pour recevoir un connecteur « type 2 » comportant sept contacts électriques pour assurer la recharge en courant alternatif (AC), tandis que le port DC reçoit deux contacts électriques pour la recharge en courant continu (DC).

Lors d'une recharge du véhicule automobile en DC, la fiche mâle combine deux connecteurs AC et DC, ainsi les deux ports correspondants du véhicule automobile sont intégralement recouverts par la fiche mâle.

Lorsque la voiture n'est pas en charge, la porte de trappe en position fermée, élément ouvrant de carrosserie, recouvre les deux ports de charge du véhicule et assure son rôle de protection pour les deux ports.

Toutefois, lors d'une recharge en courant alternatif AC uniquement avec un connecteur de type 2, le port DC se trouve totalement découvert, ce qui présente des risques de dégradation des contacts électriques causés notamment par une exposition à des environnements corrosifs ou abrasifs. Pour remédier à cela, l'utilisation d'un bouchon dans la trappe de recharge du véhicule est envisageable pour protéger le port DC.

Cependant, cette solution engendre des problèmes d'ergonomie lors de la manipulation du pistolet de recharge CCS en raison de sa lourdeur et de la rigidité du câble. Ces difficultés ergonomiques se traduisent par des risques d'oubli de retrait du bouchon lors de l'approche du pistolet au port DC, et en fin de recharge, le bouchon peut être laissé ouvert et endommagé par la fermeture de la trappe, notamment s'il est monté sur charnière, ou être arraché s'il est amovible avec un lien anti-perte.

Le document de brevet publié DE 10 2020 108 730 A1 divulgue un dispositif de connexion de charge pour un véhicule électrique, comprenant un couvercle de protection coulissant verticalement au moyen d'un mécanisme de coulissement, entre une position d'ouverture et une position de fermeture empêchant l'accès à un port de recharge à courant continu dudit véhicule automobile.

Cependant, la solution proposée par le document comporte une marge d'amélioration pour sécuriser de façon fiable et efficace le port de recharge à courant continu, ainsi que pour faciliter davantage les opérations de recharges électriques du véhicule automobile.

### Exposé de l'invention

La présente invention a pour objectif de pallier au moins un des inconvénients de l'état de la technique susmentionné. Plus particulièrement, l'invention a pour objectif de proposer une solution pratique permettant de sécuriser davantage les opérations de rechargement électrique d'un véhicule automobile à traction électrique, tout en améliorant l'ergonomie desdites opérations.

À cet effet, l'invention a pour objet une fiche mâle de charge d'un accumulateur d'énergie électrique de traction pour véhicule automobile, comprenant un connecteur à contacts électriques s'étendant longitudinalement depuis un corps de ladite fiche mâle, ledit connecteur étant connecté à un câble d'alimentation électrique configuré pour former un pont de recharge électrique vers un premier port de recharge du véhicule automobile ; remarquable en ce que ladite fiche mâle comprenant, en outre, un obturateur faisant saillie depuis le corps à proximité du connecteur à contacts électriques, ledit obturateur étant configuré pour obturer un deuxième port de recharge du véhicule automobile disposé directement en dessous du premier port de recharge, lors d'une recharge électrique dudit véhicule automobile.

Avantageusement, le premier port de recharge est à courant alternatif, et le deuxième port de recharge est à courant continu.

Préférentiellement, la disposition du deuxième port de recharge en dessous du premier port de recharge, est suivant un axe vertical du véhicule automobile, et plus préférentiellement selon le standard Combo CCS 2.

Selon un mode de réalisation, l'obturateur s'étend transversalement vers le bas depuis une face inférieure du corps, et sur au moins 20 mm depuis ladite face inférieure, de manière à couvrir intégralement le deuxième port de recharge.

Selon un mode de réalisation, l'obturateur comprend une plaque sensiblement plane s'étendant perpendiculairement à un axe longitudinal défini par le connecteur à contacts électriques, ou incliné d'au plus 20° par rapport audit axe longitudinal.

Selon un mode de réalisation, la plaque comprend une épaisseur longitudinale d'au plus 10 mm.

Selon un mode de réalisation, l'obturateur s'étend sensiblement parallèlement à un plan distal présenté au droit d'une extrémité distale du connecteur.

Selon un mode de réalisation, l'obturateur est agencé au niveau d'une partie proximale du connecteur à au plus 60 mm d'une extrémité distale dudit connecteur.

Selon un mode de réalisation, l'obturateur est rapporté au corps de ladite fiche mâle ou venant de matière avec ledit corps.

Selon un mode de réalisation, l'obturateur rapporté au corps est formé à partir d'un matériau souple, et comprenant un ajour monté serré autour du corps au niveau d'une partie proximale du connecteur.

Selon un mode de réalisation, ladite fiche comprend un seul connecteur à contacts électriques apte à assurer une charge exclusivement en courant alternatif.

L'invention concerne également un câble de charge d'un accumulateur d'énergie électrique de traction pour véhicule automobile, comprenant au moins une fiche mâle, caractérisé en ce que l'au moins une fiche mâle est selon l'invention.

Les mesures de l'invention sont avantageuses en ce que l'obturateur de la fiche mâle offre une protection efficace au deuxième port de recharge (port DC) du véhicule automobile, le prévenant ainsi de toute dégradation potentielle, et permet de garantir la préservation de ses deux contacts électriques à courant continu en les isolant des agressions extérieures par des éléments corrosifs ou abrasifs, améliorant ainsi la durabilité du système de recharge du véhicule automobile et assurant une performance optimale de la recharge électrique à long terme.

De plus, le fait que la protection du port DC est directement portée par le câble de charge (AC) selon l'invention, le véhicule automobile ne requiert plus une protection spécifique montée au droit du port DC. Dans cette configuration, la manipulation d'un pistolet de recharge CCS lors d'une recharge à courant continu (DC) est facilitée, réduisant les risques d'oublis liés au retrait des bouchons du port DC lors de l'approche du pistolet CSS du véhicule. Ainsi, les risques de laisser le bouchon de l'état de l'art ouvert et d'endommager celui-ci en fin de recharge sont également minimisés, offrant ainsi une solution fiable et plus pratique.

### Brève description des dessins

[Fig 1] représente une vue en perspective d'un câble de charge d'un accumulateur d'énergie électrique de traction pour véhicule automobile, comprenant une fiche mâle selon l'invention, et assurant une recharge électrique exclusivement en courant alternatif dudit véhicule automobile ;
[Fig 2] représente une vue en perspective de la fiche mâle selon l'invention, comprenant un obturateur faisant saillie depuis un corps de ladite fiche mâle ;
[Fig 3] représente une vue en perspective de l'obturateur de la fiche mâle de la figure 2, ledit obturateur étant configuré pour être rapporté au corps de ladite fiche mâle.

### Description détaillée

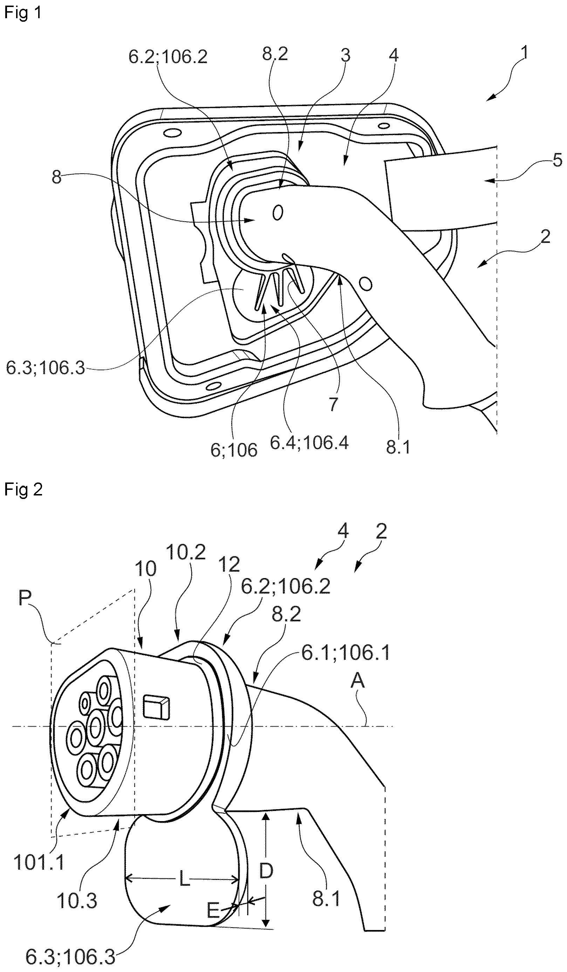

La figure 1 représente une vue en perspective d'un câble de charge 2 branché à un véhicule automobile 1 et assurant une recharge électrique exclusivement en courant alternatif AC.

Le câble de charge 2 est un câble « type 2 » comprenant une fiche mâle 4 selon l'invention, qui est dépourvue d'un connecteur à courant continu DC, et pourvue uniquement d'un seul connecteur à contacts électriques (connecteur à courant alternatif AC visible à la figure 2) qui est branché à un premier port de recharge du véhicule automobile 1, correspondant à un port de recharge à courant alternatif (port AC) disposé au droit d'une partie interne 3 de carrosserie dudit véhicule 1 qui est protégée via une trappe 5 lorsqu'elle est en position de fermeture.

Préférentiellement, le câble 2 assure une alimentation électrique du connecteur en formant un pont de recharge électrique vers le véhicule automobile 1 depuis une borne de recharge électrique (non représentée) ou depuis une prise domestique branchée au secteur. Ainsi, le câble 2 selon l'invention peut correspondre à un câble de charge mode 2 ou mode 3.

La fiche 4 comprend, en outre, un obturateur 6, 106 faisant saillie vers le bas depuis un corps 8 de ladite fiche 4 et permettant de venir obturer directement un deuxième port de recharge du véhicule automobile 1, correspondant à un port de recharge à courant continu (port DC) agencé directement en dessous du port AC, suivant une direction verticale du véhicule automobile 1. Préférentiellement, les deux ports AC et DC du véhicule automobile 1 respectent le standard Combo CCS 2.

De façon avantageuse, l'obturateur 6, 106 obturant le port DC pendant la recharge électrique, permet de protéger ses contacts électriques de l'environnement extérieur, sécurisant ainsi les opérations de recharges en courant alternatif (AC) et assurant la longévité et la fiabilité du port DC.

De plus, l'obturateur 6, 106 porté directement par le câble 2 de charge de type 2, permet d'améliorer l'ergonomie de manipulation d'un pistolet CCS (non représenté) lors d'une recharge électrique en courant continu (DC) du véhicule automobile 1. En effet, la manipulation du pistolet CCS qui ne nécessite pas de retirer un bouchon spécifique de protection du port DC, permet d'éviter les inconvénients cités dans la partie technique antérieure de la présente demande, qui sont liés à l'utilisation des protections spécifiques du port DC connues de l'état de l'art.

Préférentiellement, le véhicule automobile 1 est à traction électrique comportant un port DC dépourvu de toute protection spécifique, ledit port DC étant destiné à être protégé uniquement pendant la recharge AC au moyen de l'obturateur 6, 106 s'étendant directement en saillie depuis la fiche mâle selon l'invention.

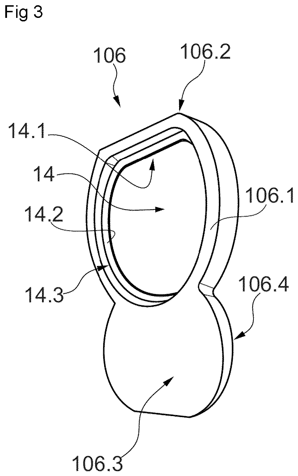

Préférentiellement, l'obturateur 6, 106 de la fiche 4 peut être réalisé suivant deux modes de réalisation de l'invention, un premier mode de réalisation dans lequel l'obturateur 6 est formé avec le corps 8 de ladite fiche 4 (de préférence formés d'une seule pièce moulée), ou suivant un deuxième mode de réalisation dans lequel l'obturateur 106 (visible à la figure 3) est rapporté à la fiche 4 via un ajour monté serré autour du corps 8. Les deux modes de réalisation de l'invention seront détaillés plus loin dans la présente description.

La figure 2 représente une vue en perspective de la fiche mâle 4 selon l'invention, comprenant l'obturateur 6, 106 pouvant être selon le premier ou le deuxième mode de réalisation de l'invention.

On peut voir le connecteur 10 à contacts électriques s'étendant longitudinalement depuis le corps 8 suivant un axe longitudinal A défini par ledit connecteur 10.

Le connecteur 10 comprend une extrémité distale 10.1 définissant un plan distal P, et une partie proximale 10.2 rattachée directement au corps 8.

De préférence, l'obturateur 6, 106 est disposé à proximité du connecteur 10, et plus précisément au droit de sa partie proximale 10.2, et de manière sensiblement parallèle au plan distal P. Le terme « sensiblement » signifie ici que l'obturateur 6, 106 est essentiellement parallèle ou incliné d'au plus 10° par rapport au plan distal P.

L'obturateur 6, 106 est préférentiellement disposé à au plus 60 mm depuis l'extrémité distale 10.1 du connecteur 10, et plus préférentiellement à au plus 50 mm de ladite extrémité distale 10.1.

Préférentiellement, la partie proximale 10.2 du connecteur 10 est définie par une nervure circonférentielle 12 formant un épaulement avec ledit connecteur 10. Dans cette configuration, l'obturateur 6, 106 se conforme à ladite nervure 12 de manière à ce qu'une face frontale 6.1, 106.1 dudit obturateur 6, 106 vienne affleurer une face frontale 12.1 de ladite nervure circonférentielle 12.

L'obturateur 6, 106 comprend une partie supérieure 6.2, 106.2 enveloppant, de préférence, toute la circonférence du corps 8 au droit de la partie proximale 10.2, ladite partie supérieure 6.2, 106.2 s'épaule sur la nervure 12 de manière à recouvrir intégralement cette dernière.

Toutefois, l'invention ne se limite pas à une partie proximale 10.2 pourvue d'une nervure 12, ladite partie proximale 10.2 peut être dépourvue de nervure et former une continuité directe entre l'extrémité distale 10.1 et le corps 8 de la fiche mâle 4.

L'obturateur 6, 106 comprend également une plaque 6.3, 106.3 au niveau de sa partie inférieure, qui s'étend vers le bas depuis une face inférieure 8.1 du corps 8. Ladite face inférieure 8.1 étant, de préférence, sensiblement au même niveau qu'une face inférieure 10.3 du connecteur 10.

Préférentiellement, la plaque 6.3, 106.3 comprend une longueur D mesurée depuis la face inférieure 8.1 et suivant la direction perpendiculaire à l'axe A, ladite longueur D étant égale à au moins 20 mm, et plus préférentiellement à environ 40 mm (±10 mm). Ladite plaque 6.3, 106.3 comprenant une largeur transversale L égale à environ 60 mm (±10 mm).

Dans cette configuration, l'obturateur 6, 106 incluant la plaque 6.3, 106.3, s'étend transversalement à l'axe longitudinal A, et s'étend préférentiellement perpendiculairement à l'axe longitudinal A ou incliné d'au plus 20° par rapport audit axe A. Encore plus préférentiellement, la plaque 6.3, 106.3 est légèrement inclinée (d'au plus 10°) vers l'avant en direction du port DC correspondant sur le véhicule automobile, de manière à assurer un contact ferme de ladite plaque 6.3, 106.3 contre ledit port DC lors de la recharge en AC dudit véhicule, sécurisant ainsi davantage le port DC.

La plaque 6.3, 106.3 est, de préférence, sensiblement plane, notamment au niveau de sa face frontale 6.1, 106.1 (tel qu'illustré aux figures 2 et 3), ladite plaque 6.3, 106.3 présentant une épaisseur longitudinale E égale à au plus 10 mm, et à environ 8 mm (±2 mm).

On peut observer une section transversale ovale de la plaque 6.3, 106.3, celle-ci étant préférentiellement essentiellement similaire à la section transversale du port DC respectant le standard Combo CCS 2.

Dans une alternative non représentée, la plaque 6.3, 106.3 peut comprendre une empreinte comprenant deux protubérances s'étendant longitudinalement vers l'avant suivant l'axe A et pouvant être destinées à s'enficher dans deux contacts électriques correspondants du port DC du véhicule automobile.

La plaque 6.3, 106.3 de l'obturateur 6, 106 comprend avantageusement, au niveau d'une face arrière 6.4, 106.4 dudit obturateur 6, 106, des nervures de rigidification 7 (visibles à la figure 1) s'étendant transversalement depuis la partie supérieure 6.2, 106.2, et permettant d'éviter la déformation de ladite plaque 6.3, 106.3 et de maintenir un appui ferme de cette dernière contre le port DC à protéger.

La figure 3 représente une vue en perspective de l'obturateur 106 selon le deuxième mode de réalisation, dans lequel ledit obturateur 106 est configuré pour être rapporté au corps de la fiche mâle.

L'obturateur 106 comprend un ajour 14 destiné à épouser la forme du corps de la fiche mâle au niveau de la partie proximale du connecteur, similairement à l'agencement visible à la figure 2.

Préférentiellement, le corps de la fiche mâle comprend une section transversale qui est sensiblement similaire à celle du connecteur à contacts électriques AC, et comprenant ainsi un méplat au niveau de sa face supérieure 8.2 visible aux figures 1 et 2.

A cet égard, l'ajour 14 comprend également un méplat 14.1 permettant de venir se conformer au méplat du corps de la fiche. Avantageusement, le méplat 14.1 de l'obturateur 106 permet d'agir comme un moyen d'indexation angulaire dudit obturateur 106 sur la fiche mâle.

De préférence, l'obturateur 106 comprend, en outre, au droit de l'ajour 14, une paroi circonférentielle interne 14.2 formant un épaulement interne 14.3, et destinée à venir en appui contre la nervure 12 du connecteur de la figure 2, afin d'envelopper celle-ci.

L'obturateur 106 est préférentiellement obtenu en un matériau souple et déformable, plus préférentiellement obtenu en caoutchouc moulé. Cela permet à la partie supérieure 106 d'être apte à se déformer pour assurer un montage serré de l'ajour 14 sur le corps de la fiche.

Alternativement, l'obturateur 106 peut être fabriqué à partir d'un matériau rigide (par exemple, en polymère), configuré pour se fixer au corps de la fiche par clippage et/ou par vissage et/ou par tout autre moyen de fixation approprié.

Avantageusement, l'obturateur rapporté 106 au corps de la fiche mâle du câble de charge électrique selon l'invention, peut s'adapter à toutes formes de corps de fiches mâles et ne se limite pas à un corps pourvu d'un méplat.

Dans cette configuration, la présente invention, permet au moyen de l'obturateur rapporté 106 suivant le deuxième mode de réalisation, de venir se fixer sur tous les câbles de recharge en courant alternatif (AC) de type 2 de l'art antérieur, de manière à venir se conformer au corps de leur fiches, et ainsi venir protéger le port DC du véhicule automobile lors d'une recharge électrique en courant alternatif de ce dernier.

## Revendications

1. Fiche mâle (4) de charge d'un accumulateur d'énergie électrique de traction pour véhicule automobile (1), comprenant un connecteur (10) à contacts électriques s'étendant longitudinalement depuis un corps (8) de ladite fiche mâle (4), ledit connecteur (10) étant connecté à un câble d'alimentation électrique configuré pour former un pont de recharge électrique vers un premier port de recharge du véhicule automobile (1) ;
**caractérisé en ce que**
ladite fiche mâle (4) comprenant, en outre, un obturateur (6 ; 106) faisant saillie depuis le corps (8) à proximité du connecteur (10) à contacts électriques, ledit obturateur (6 ; 106) étant configuré pour obturer un deuxième port de recharge du véhicule automobile (1) disposé directement en dessous du premier port de recharge, lors d'une recharge électrique dudit véhicule automobile (1).

2. Fiche (4) selon la revendication 1, dans laquelle l'obturateur (6 ; 106) s'étend transversalement vers le bas depuis une face inférieure (8.1) du corps (8), et sur au moins 20 mm depuis ladite face inférieure (8.1), de manière à couvrir intégralement le deuxième port de recharge.

3. Fiche (4) selon l'une des revendications 1 et 2, dans laquelle l'obturateur (6 ; 106) comprend une plaque (6.3 ; 106.3) sensiblement plane s'étendant perpendiculairement à un axe longitudinal (A) défini par le connecteur (10) à contacts électriques, ou incliné d'au plus 20° par rapport audit axe longitudinal (A).

4. Fiche (4) selon la revendication 3, dans laquelle la plaque (6.3 ; 106.3) comprend une épaisseur (E) longitudinale d'au plus 10 mm.

5. Fiche (4) selon l'une des revendications 1 à 4, dans laquelle l'obturateur (6 ; 106) s'étend sensiblement parallèlement à un plan distal (P) présenté au droit d'une extrémité distale (10.1) du connecteur (10).

6. Fiche (4) selon l'une des revendications 1 à 5, dans laquelle l'obturateur (6 ; 106) est agencé au niveau d'une partie proximale (10.2) du connecteur (10) à au plus 60 mm d'une extrémité distale (10.1) dudit connecteur (10).

7. Fiche (4) selon l'une des revendications 1 à 6, dans laquelle l'obturateur (6 ; 106) est rapporté au corps (8) de ladite fiche mâle (4) ou venant de matière avec ledit corps (8).

8. Fiche (4) selon la revendication 7, dans laquelle l'obturateur rapporté (106) au corps (8) est formé à partir d'un matériau souple, et comprenant un ajour (14) monté serré autour du corps (8) au niveau d'une partie proximale (10.2) du connecteur (10).

9. Fiche (4) selon l'une des revendications 1 à 8, dans laquelle ladite fiche (4) comprend un seul connecteur (10) à contacts électriques apte à assurer une charge exclusivement en courant alternatif.

10. Câble de charge (2) d'un accumulateur d'énergie électrique de traction pour véhicule automobile (1), comprenant au moins une fiche mâle (4), **caractérisé en ce que** l'au moins une fiche mâle (4) est selon l'une des revendications 1 à 9.
